# EUROPEAN PATENT APPLICATION

(11) **EP 3 342 815 A1**
(43) Date of publication of application: **04.07.2018**
(21) Application number: 16855193.5
(22) Date of filing: 05.09.2016
(51) Int. Cl.: C08L 9/06, B60C 1/00, C08K 3/04, C08K 3/36, C08K 5/13, C08K 5/375

(54) **TIRE**

(30) Priority: 14.10.2015 JP 2015203168
(71) Applicant: Sumitomo Rubber Industries, Ltd., Kobe-shi, Hyogo 651-0072 (JP)
(72) Inventor: MIYAZAKI, Tatsuya, Kobe-shi Hyogo 651-0072 (JP)
(74) Representative: Manitz Finsterwald Patentanwälte PartmbB
(86) International application number: PCT/JP2016/076009
(87) International publication number: WO 2017/064939

(57) **Abstract**

It is an object of the present invention to provide a tire having a tread composed of a rubber composition which is good in performance required for the tread by suppressing a radical chain reaction during kneading. The present invention relates to a tire comprising a tread composed of a rubber composition, the rubber composition comprising 3 parts by mass or more of a carbon black having a nitrogen adsorption specific surface area of 80 m²/g or more, and 0.1 to 10 parts by mass of an anti-aging agent represented by formula (1) or formula (2), based on 100 parts by mass of a rubber component comprising a styrene butadiene rubber.

## Description

### TECHNICAL FIELD

The present invention relates to a tire having a tread composed of a predetermined rubber composition.

### BACKGROUND OF THE INVENTION

Tires of rubber products, especially, treads and sidewalls that configure outer surfaces of tires, deteriorate during use due to various factors, such as oxygen, ozone, heat, light, dynamic fatigue, etc. To extend lifetime of tires by suppressing such a deterioration phenomenon caused by these various factors, an anti-aging agent for maintaining weather resistance is compounded in the tire. The compounding of the anti-aging agent is very important, particularly, in the treads and sidewalls configuring the outer surfaces of the tires. The anti-aging agent is compounded in race tires, also because of suppressing excessive cutting of a styrene butadiene rubber during kneading and suppressing cutting of a styrene butadiene rubber by friction between a road surface and the tire during driving.

Despite several causes of deterioration of the tires being considered as mentioned above, the essence of such deterioration is a deteriorative reaction, which is caused by a growth reaction that progresses consecutively and repeatedly, originated from radical species generated by various factors. Amine-based anti-aging agents and phenol-based anti-aging agents are known as the anti-aging agents suitable for preventing this deteriorative chain reaction due to the radical species. These anti-aging agents exhibit an anti-aging effect by stopping the progress of the consecutive deteriorative reaction while being stabilized by preferentially reacting with radical species during use of the tire.

Amine-based anti-aging agents are well known as anti-aging agents compounded in rubber compositions for the tread and sidewalls. Among these, N-phenyl-N'-(1,3-dimethylbutyl)-p-phenylenediamine (6PPD) and 2,2,4-trimethyl-1,2-dihydroquinoline polymer (TMQ) are widely used for applications ranging from general purpose tires to race tires (see, for example, Patent Document 1, etc.).

### PRIOR ART DOCUMENT

### Patent Document

Patent Document 1: JP 2013-221052 A

### SUMMARY OF THE INVENTION

### PROBLEM TO BE SOLVED BY THE INVENTION

The above-mentioned 6PPD and TMQ are the anti-aging agents with an excellent anti-aging effect. However, the inventors have found that the anti-aging agent containing quinoline, such as TMQ, is radicalized by a radical reaction originated from radical species generated during kneading, which causes a radical chain reaction, and consecutively further causes cutting of a polymer, recombination of cut pieces of the polymer and the like, leading to unfavorable increase in viscosity of a rubber composition for a tire, deterioration of grip performance and fuel efficiency of the tire, and degradation in the functionality as the rubber composition for a tire.

Even when the anti-aging agent having dihydroquinoline is radicalized, if this ant-aging agent is used with 6PPD, the radical chain reaction can be suppressed by causing the 6PPD to preferentially react with radical species to be stabilized. However, in this case, there is a problem that the original functions of extending the lifetime of the tire and maintaining weather resistance thereof cannot be exhibited due to consumption of the 6PPD during kneading. Furthermore, there is another problem that the performance required for treads, such as fuel efficiency performance, abrasion resistance performance, and grip performance, would be degraded as the cutting of the polymer may partially occur until the 6PPD is completely dispersed.

There is also a problem that when the anti-aging agent having dihydroquinoline is used together with a specific silane coupling agent, the silane coupling agent is also radicalized, thereby a consecutive deteriorative reaction is accelerated.

An object of the present invention is to provide a tire having a tread composed of a rubber composition which is good in performance required for the tread by suppressing a radical chain reaction during kneading.

### MEANS TO SOLVE THE PROBLEM

The present invention relates to a tire having a tread composed of a rubber composition, the rubber composition comprising 3 parts by mass or more of a carbon black having a nitrogen adsorption specific surface area of 80 m²/g or more, and 0.1 to 10 parts by mass of an anti-aging agent represented by the following formula (1) or an anti-aging agent represented by the following formula (2), based on 100 parts by mass of a rubber component comprising a styrene butadiene rubber. 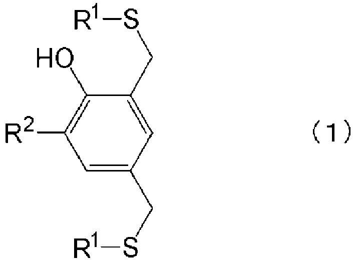 In the formula (1), each R¹ independently represents a C₁ to C₂₀ alkyl group which may have a substituent, a phenyl group which may have a substituent, or a benzyl group which may have a substituent, and R² is a C₁ to C₁₀ alkyl group which may have a substituent or a C₅ to C₁₂ cycloalkyl group which may have a substituent. 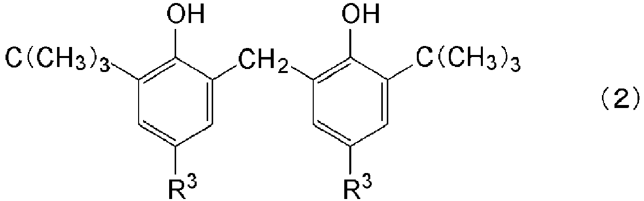 In the formula (2), each R³ independently represents a C₁ to C₁₀ alkyl group.

It is preferable that the rubber component comprises 60% by mass or more of a styrene butadiene rubber in which a styrene content is in a range of 16 to 60% by mass.

It is preferable that a nitrogen adsorption specific surface area of the carbon black is 151 m²/g or more and a content of the carbon black is 5 parts by mass or more.

It is preferable that the rubber composition further comprises 20 parts by mass of a silica and a mercapto-based silane coupling agent based on 100 parts by mass of the rubber component.

It is preferable that the rubber composition is a rubber composition that does not contain an anti-aging agent having dihydroquinoline.

### EFFECTS OF THE INVENTION

According to the tire of the present invention, it is possible to provide a tire having a tread composed of a rubber composition that reduces the consumption of an anti-aging agent during kneading, exhibits the original performance of the anti-aging agent, and is good in the performance required for a tread by suppressing a radical chain reaction during kneading.

### DETAILED DESCRIPTION

A tire of the present invention is a tire having a tread composed of a rubber composition that comprises predetermined carbon black and anti-aging agent with respect to a rubber component containing a styrene butadiene rubber.

The styrene butadiene rubber (SBR) is not particularly limited, and examples thereof may include emulsified polymerized SBR (E-SBR), solution polymerized SBR (S-SBR) and the like, and may or may not be oil-extended. Among these, oil-extended SBR with a high molecular weight is preferable from the viewpoint of grip performance. Further, terminal modified S-SBR and main chain modified S-SBR that enhance interaction with a filler can also be used. These SBRs may be used alone or in combination.

The styrene content in the SBR is preferably 16% by mass or more, more preferably 20% by mass or more, further preferably 25% by mass or more, particularly preferably 30% by mass or more from the viewpoint of the grip performance. If the styrene content is extremely large, adjacent styrene groups are located closer to each other, the polymer becomes too hard, and the crosslinking is more likely to become non-uniform, so that the blow property of the tire might deteriorate at a high temperature during running. Further, there is a tendency that the temperature dependence of the tire becomes significant, and thereby the performance of the tire varies depending on a temperature change, so that the stable grip performance cannot be obtained satisfactorily in the middle and later periods of running. Therefore, the styrene content is preferably 60% by mass or less, more preferably 50% by mass or less, further preferably 40% by mass or less. It should be noted that the styrene content in the SBR, described herein, is calculated by ¹H-NMR measurement.

The vinyl content in the SBR is preferably 10% or more, more preferably 15% or more from the viewpoint of hardness (Hs) of the rubber composition and grip performance. The vinyl content in the SBR is preferably 90% or less, more preferably 80% or less, further preferably 70% or less, particularly preferably 60% or less from the viewpoint of grip performance, tensile elongation at break (EB) (durability), and abrasion resistance. It should be noted that the vinyl content (1,2-bond butadiene unit amount) in the SBR, described herein, can be measured by an infrared absorption spectrometry method.

Further, the SBR preferably has a glass-transition temperature (Tg) of -45°C or higher, and more preferably -40°C or higher. The above-mentioned Tg is preferably 10°C or lower, more preferably 5°C or lower in order to prevent brittle cracks in winter of the Temperate Zone. It should be noted that the glass transition temperature of the SBR, described herein, is a value measured by performing differential scanning calorimetry (DSC) under the condition of a temperature elevating rate of 10°C/min in accordance with JIS K 7121.

A weight average molecular weight (Mw) of the SBR is preferably 700,000 or more, more preferably 900,000 or more, further preferably 1,000,000 or more, from the viewpoint of grip performance and abrasion resistance. A weight average molecular weight of the SBR is preferably 2,000,000 or less, more preferably 1,800,000 or less from the viewpoint of blow property. Furthermore, a Mw of the SBR is preferably in a range of 200,000 to 700,000 because a large amount of modified ends can be used from the viewpoint of fuel efficiency. It should be noted that the weight average molecular weight of the SBR, described herein, can be determined by standard polystyrene conversion based on measurements by gel permeation chromatography (GPC) (GPC-8000 series, manufactured by Tosoh Corporation, detector: differential refractometer, column: TSKGEL SUPERMALTPORE HZ-M, manufactured by Tosoh Corporation).

A content of the SBR in the rubber component is preferably 60% by mass or more, more preferably 65% by mass or more, still more preferably 70% by mass or more, for the reason of obtaining sufficient blow property. For race tires, the SBR content in the rubber component is particularly preferable 80% by mass or more. The upper limit of the SBR content is not particularly limited, but is preferably 100% by mass from the viewpoint of grip performance.

In particular, it is preferable that the rubber component preferably contains 60% by mass or more of the SBR in which a styrene content is in a range of 16 to 60% by mass, more preferably 65% or more of the SBR in which a styrene content is in a range of 25 to 55% by mass, for the reason of exhibiting higher grip performance and blow property.

The rubber component according to the present disclosure can also contain other rubber components, in addition to the SBR. Examples of the other rubber components, except for the SBR, include diene-based rubbers, such as isoprene-based rubbers, butadiene rubber (BR), styrene isoprene butadiene rubber (SIBR), chloroprene rubber (CR) and acrylonitrile butadiene rubber (NBR); and butyl-based rubbers. These rubber components may be used alone or in combination. Among these, NR and BR are preferably contained from the viewpoint of the balance among fuel efficiency, abrasion resistance, durability, and wet grip performance, when used in general-purpose tires, such as tires for trucks and buses and tires for passenger cars. Meanwhile, the rubber component is preferably composed of only SBR because of its good dry grip performance, when used in race tires, especially, race tires for dry road surfaces.

Examples of natural rubbers (NRs) include, but are not particularly limited to, those commonly used in the tire industry, such as SIR20, RSS#3, TSR20, protein-deproteinized natural rubbers (DPNR), and ultra pure natural rubbers (UPNR).

In the case of tires for trucks and buses, the NR content in the rubber component is preferably in a range of 60 to 100% by mass, whereas in the case of tires for passenger cars and commercial cars, the NR content in the rubber component is preferably in a range of 0 to 70% by mass. If the NR content deviates from the above-mentioned range, adequate grip performance, abrasion resistance, and durability might not be obtained.

Examples of usable BR includes, but are not limited to, BR with a high cis content such as BR1220 manufactured by Zeon Corporation and BR130B and BR150B manufactured by Ube Industries, Ltd.; modified BR such as BR1250H manufactured by Zeon Corporation; BR containing syndiotactic polybutadiene crystals such as VCR412 and VCR617 manufactured by Ube Industries, Ltd.; and BR synthesized using a rare earth element catalyst, such as BUNA-CB25 manufactured by Lanxess K.K. These BRs may be used alone or in combination. Among them, BR synthesized using a rare earth element catalyst (rare-earth-based BR) is preferable from the viewpoint of fuel efficiency and abrasion resistance.

The rare-earth-based BR is a butadiene rubber synthesized using a rare earth element catalyst, and has a characteristic that the cis content is high and the vinyl content is low. As the rare-earth-based BR, one commonly used in tire manufacturing can be used.

As the rare-earth-based catalyst used for synthesis of the rare-earth-based BR, a well-known one in the related art can be used, and examples thereof include catalysts containing lanthanum-series rare earth element compounds, organic aluminum compounds, aluminoxanes, halogen-containing compounds, and Lewis bases if necessary. Among these, Nd-based catalysts using neodymium (Nd)-containing compounds as the lanthanum-series rare earth element compound are particularly preferable.

Examples of the lanthanum-series rare earth element compounds include halides, carboxylates, alcoholates, thioalcoholates, and amides of rare earth metals with atomic numbers 57-71. Among these, the Nd-based catalyst is preferable because BR with a high cis content and a low vinyl content can be obtained therefrom.

Examples of the usable organic aluminum compounds include, AlR^{a}R^{b}R^{c} (where R^{a}, R^{b}, and R^{c} are the same or different and each represent hydrogen or a hydrocarbon group having 1 to 8 carbon atoms). Examples of the aluminoxane include chained aluminoxanes and cyclic aluminoxanes. Examples of the halogen-containing compound include aluminum halides, represented by AlXₖR^{d}₃₋ₖ where X is a halogen, R^{d} is an alkyl group, an aryl group or an aralkyl group having 1 to 20 carbon atoms, and k is 1, 1.5, 2 or 3; strontium halides such as Me₃SrCl, Me₂SrCl₂, MeSrHCl₂, and MeSrCl₃; and metallic halides such as silicon tetrachloride, tin tetrachloride, and titanium tetrachloride. The Lewis base is used to complex the lanthanum-series rare earth element compound, and examples of the suitable Lewis base include acetyl acetone, ketone, alcohol, etc.

The rare earth element catalyst can be used in the state of being dissolved in an organic solvent (n-hexane, cyclohexane, n-heptane, toluene, xylene, benzene or the like) or may be used while being supported on an appropriate carrier made of silica, magnesia, magnesium chloride, etc., when polymerizing butadiene. As the polymerization conditions, either solution polymerization or bulk polymerization may be conducted; a preferable polymerization temperature is from -30 to 150°C; and a polymerization pressure may be arbitrarily selected depending on other conditions.

The cis 1,4-bond content (cis content) in the rare-earth-based BR is preferably 90% by mass or more, more preferably 93% by mass or more, still more preferably 95% by mass or more, from the viewpoint of durability and abrasion resistance.

The vinyl content in the rare-earth-based BR is preferably 1.8% by mass or less, more preferably 1.5% by mass or less, further preferably 1.0% by mass or less, particularly preferably 0.8% by mass or less, from the viewpoint of durability and abrasion resistance. It should be noted that the vinyl content (1,2-bond butadiene unit amount) in the BR and the cis-content (cis 1,4-bond content) in the BR, described herein, can be measured by the infrared absorption spectrometry method.

When BR is contained, the content of the BR in the rubber component is preferably 10% by mass or more, more preferably 15% by mass or more, further preferably 20% by mass or more, from the viewpoint of abrasion resistance, grip performance and fuel efficiency. This content is preferably 70% by mass or less, more preferably 60% by mass or less from the viewpoint of abrasion resistance, grip performance and fuel efficiency, and is preferably 40% by mass or less in tires requiring adequate grip performance.

The nitrogen adsorption specific surface area (N₂SA) of the carbon black is preferably 80 m²/g or more, preferably 100 m²/g or more, more preferably 140 m²/g or more, further preferably 151 m²/g or more, particularly preferably 195 m²/g or more from the viewpoint of grip performance. Moreover, N₂SA is preferably 600 m²/g or less, more preferably 500 m²/g or less, further preferably 400 m²/g or less, from the viewpoint of ensuring satisfactory filler dispersibility. It should be noted that a N₂SA of the carbon black can be determined by a BET method in accordance with JIS K 6217-2: 2001.

The content of carbon black in the rubber component is 3 parts by mass or more based on 100 parts by mass of the rubber component for the reason of ensuring ultraviolet crack prevention performance. The preferred carbon black content varies depending on the grip performance, abrasion resistance, and fuel efficiency, expected for the tire. For tires that ensure wet grip performance by using silica, such as general-purpose tires, the content of carbon black is preferably in a range of 5 to 30 parts by mass based on 100 parts by mass of the rubber component. For tires that ensure dry grip performance and abrasion resistance by using carbon black, such as race tires, the content of carbon black is preferably in a range of 40 to 140 parts by mass based on 100 parts by mass of the rubber component.

The above-mentioned anti-aging agent is either an anti-aging agent represented by the following formula (1) or an anti-aging agent represented by the following formula (2). This anti-aging agent is compounded in the rubber composition, thereby making it possible to suppress the radical chain reaction during kneading and to improve the performance required for the tire tread.

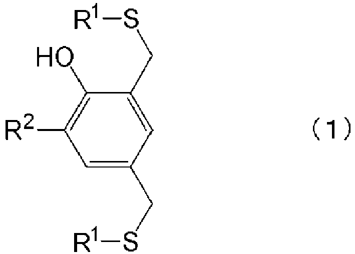

In the formula (1), each R¹ independently represents a C₁ to C₂₀ alkyl group which may have a substituent, a phenyl group which may have a substituent, or a benzyl group which may have a substituent, and R² is a C₁ to C₁₀ alkyl group which may have a substituent or a C₅ to C₁₂ cycloalkyl group which may have a substituent.

Examples of the C₁ to C₂₀ alkyl group in R¹ include a methyl group, an ethyl group, an n-propyl group, an isopropyl group, an n-butyl group, a sec-butyl group, a t-butyl group, an isobutyl group, an n-pentyl group, an isopentyl group, a neopentyl group, a t-pentyl group, an n-hexyl group, an isohexyl group, a 1-methylpentyl group, a 2-methylpentyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecil group, an n-heptadecil group, an n-octadecyl group, an n-nonadecil group, an n-icosyl group, and the like. Among these, C₈ to C₁₂ alkyl groups are preferable, and an n-octyl group, which is a C₈ alkyl group, and an n-dodecyl group, which is a C₁₂ alkyl group, are more preferable.

In the R¹, examples of a substituent in a C₁ to C₂₀ alkyl group which may have the substituent, a phenyl group which may have the substituent, or a benzyl group which may have the substituent, include hydroxyl groups; halogen atoms such as a fluorine atom, a chlorine atom, a bromine atom, and an iodine atom; C₁ to C₆ alkyl groups such as a methyl group, an ethyl group, an n-propyl group, an isopropyl group, an n-butyl group, a sec-butyl group, a t-butyl group, an n-pentyl group, an isopentyl group, a neopentyl group, a t-pentyl group, an n-hexyl group, an isohexyl group, a 1-methylpentyl group, and a 2-methylpentyl group; C₁ to C₆ alkoxy groups such as a methoxy group, an ethoxy group, an n-propoxy group, an isopropoxy group, an n-butoxy group, a sec-butoxy group, and a t-butoxy groups; -OCOR⁴ groups; -COOR⁵ groups; -CONR⁶R⁷ groups; and the like.

R⁴ and R⁵ each independently represent a C₁ to C₂₀ alkyl group or a C₂ to C₈ alkenyl group; and R⁶ and R⁷ each independently represent hydrogen, a C₁ to C₂₀ alkyl group, or a C₂ to C₈ alkenyl group.

Specific examples of the C₁ to C₂₀ alkyl group can be the same as the specific examples of the R². Examples of a C₂ to C₈ alkenyl group include a vinyl group, an allyl group, an isopropenyl group, a 1-propenyl group, a 2-propenyl group, a 1-butenyl group, a 2-butenyl group, a 3-butenyl group, a 1,3-butanedienyl group and a 2-methyl-2-propenyl group, and the like.

Specific examples of the C₁ to C₁₀ alkyl group in R² include some of the specific examples of the R¹ that satisfy the conditions for C₁ to C₁₀. Among these, C₁ to C₃ alkyl groups are preferable, and a methyl group is more preferable.

Examples of the C₅ to C₁₂ cycloalkyl group include cyclopentyl, cyclohexyl, cyclooctyl, cyclodecyl, and the like. Examples of a substituent in the C₁ to C₁₀ alkyl group which may have the substituent and a substituent in the C₃ to C₁₂ cycloalkyl group which may have the substituent include hydroxyl groups; halogen atoms such as a fluorine atom, a chlorine atom, a bromine atom, and an iodine atom; C₁ to C₆ alkyl groups such as a methyl group, an ethyl group, an n-propyl group, an isopropyl group, an n-butyl group, a sec-butyl group, a t-butyl group, an n-pentyl group, an isopentyl group, a neopentyl group, a t-pentyl group, an n-hexyl group, an isohexyl group, a 1-methylpentyl group, and a 2-methylpentyl group; and C₁ to C₆ alkoxy groups such as a methoxy group, an ethoxy group, an n-propoxy group, an isopropoxy group, an n-butoxy group, a sec-butoxy group, and a t-butoxy group; and the like.

Specific examples of the anti-aging agent represented by the formula (1) include 4,6-bis(octyltiomethyl)-o-cresol represented by the formula (3) (ANTAGE HP-400 manufactured by Kawaguchi Chemical Industries Co., Ltd., or IRGANOX1520L manufactured by BASF corporation) and 4,6-bis(dodecylthiomethyl)-o-cresol represented by the formula (4) (ANTAGE HP-500 manufactured by Kawaguchi Chemical Industries Co., Ltd., or IRGANOX1726 manufactured by BASF Corporation).

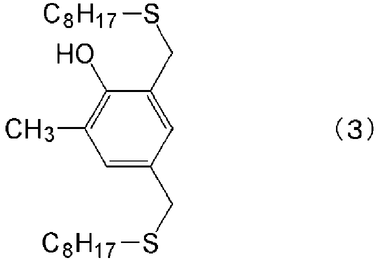

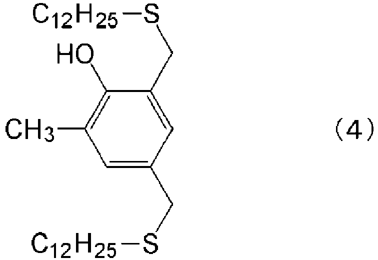

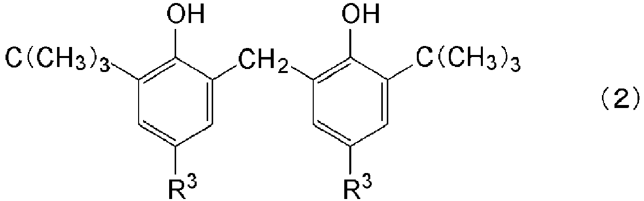

In the formula (2), each R³ independently represents a C₁ to C₁₀ alkyl group.

Examples of the C₁ to C₁₀ alkyl group in the R³ include a methyl group, an ethyl group, an n-propyl group, an isopropyl group, an n-butyl group, a sec-butyl group, a t-butyl group, an isobutyl group, an n-pentyl group, an isopentyl group, a neopentyl group, a t-pentyl group, an n-hexyl group, an isohexyl group, a 1-methylpentyl group, a 2-methyl pentyl group, an n-heptyl group, an n-octyl group, an n-nonyl group, an n-decyl group, and the like. Among these, C₁ to C₃ alkyl groups are preferable, and a methyl group and an ethyl group are more preferable.

Specific examples of the anti-aging agent represented by the formula (2) include 2,2'-methylene-bis(4-methyl-6-tert-butylphenol) represented by the formula (5) (ANTAGE W-400 manufactured by Kawaguchi Chemical Industries Co., Ltd.) and 2,2'-methylene-bis(4-ethyl-6-tert-butylphenol) represented by the formula (6) (ANTAGE W-500 manufactured by Kawaguchi Chemical Industries Co., Ltd.), and the like.

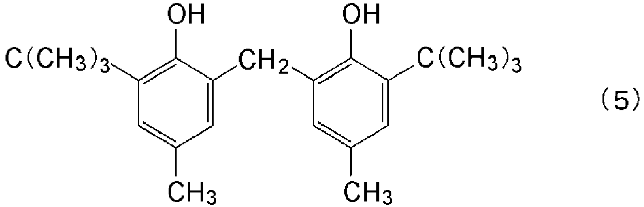

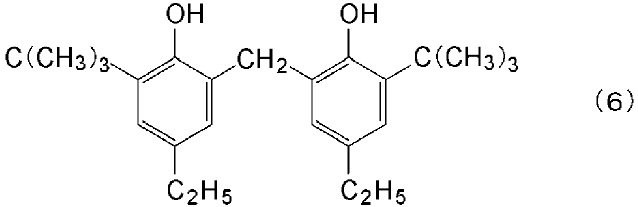

The content of the anti-aging agent represented by the formula (1) or the anti-aging agent represented by the formula (2) is 0.1 part by mass or more, preferably 0.4 part by mass or more, more preferably 0.6 part by mass or more, based on 100 parts by mass of the rubber component. If the content of the anti-aging agent is less than 0.1 part by mass, the effect of the anti-aging agent tends to become insufficient. The content of the anti-aging agent is 10 parts by mass or less, preferably 5 parts by mass or less, more preferably 3 parts by mass or less. If the content of the anti-aging agent exceeds 10 parts by mass, the fuel efficiency performance and the abrasion resistance performance of the tire would deteriorate in some cases.

For general-purposed tires, the anti-aging agent represented by the formula (1) or (2) is preferably compounded because it is better in achieving both the fuel efficiency performance and the abrasion resistance performance. Meanwhile, for race tires, the anti-aging agent represented by the formula (2) is preferably compounded because it is good in achieving both initial grip and running grip.

Any compounding agent commonly used in manufacture of the rubber composition, as well as the above-mentioned components, can be compounded as appropriate in the rubber composition according to the present disclosure. Examples of the compounding agent include silica, other inorganic fillers, silane coupling agents, resin components, oil, zinc oxide, stearic acid, anti-aging agents other than the anti-aging agents of the formula (1) and the formula (2), wax, vulcanizing agents, vulcanizing accelerators and the like.

For general-purpose tires that require the balance among abrasion resistance, durability, and wet grip performance, silica is preferably compounded. The silica may be, for example, silica prepared by a dry method (anhydrous silicic acid), silica prepared by a wet method (hydrated silicic acid), or the like. Among these, silica prepared by the wet method is preferable because it has many silanol groups on its surface and thus has many reaction points with the silane coupling agent.

The BET specific surface area of silica is preferably from 70 to 300 m²/g, more preferably from 80 to 280 m²/g, further preferably from 90 to 250 m²/g from the viewpoint of abrasion resistance performance, wet grip performance and processability. It should be noted that the N₂SA of silica as used herein is a value determined by measurement using the BET method in accordance with ASTM D3037-81.

When silica is contained, the content of silica is preferably 40 parts by mass or more, more preferably 50 parts by mass or more based on 100 parts by mass of the rubber component from the viewpoint of wet grip performance. Furthermore, the silica content is preferably 115 parts by mass or less, more preferably 110 parts by mass or less, and further 105 parts by mass or less for the reason of attaining adequate processability and suppressing shrinkage of the rubber composition due to cooling after vulcanization.

Silica is preferably used in combination with a silane coupling agent. The usable silane coupling agent is any silane coupling agent that has been hitherto used in combination with silica in rubber industry, and examples thereof include sulfide-based silane coupling agents such as bis(3-triethoxysilylpropyl)disulfide, bis(3-triethoxysilylpropyl)tetrasulfide; mercapto-based silane coupling agents such as 3-mercaptopropyltrimethoxysilane, NXT-Z100, NXT-Z45, and NXT (coupling agents with a mercapto group or a protected mercapto group), manufactured by Momentive Performance Materials; vinyl-based silane coupling agents such as vinyltriethoxysilane; amino-based silane coupling agents such as (3-aminopropyl)triethoxysilane; glycidoxy-based silane coupling agents such as γ-glycidoxypropyltriethoxysilane; nitro-based silane coupling agents such as (3-nitropropyl)trimethoxysilane; and chloro-based silane coupling agents such as (3-chloropropyl)trimethoxysilane. These silane coupling agents may be used alone or in combination. Among these, sulfide-based and mercapto-based silane coupling agents are preferable because of strong bonding force with silica and good fuel efficiency property. Especially, the mercapto-based silane coupling agents are preferable because the fuel efficiency property and abrasion resistance can be improved adequately when being used.

Despite of good fuel efficiency property and abrasion resistance, as mentioned above, the mercapto-based silane coupling agents have a problem that a radical chain reaction is induced when an anti-aging agent having dihydroquinoline is contained as the anti-aging agent. However, the rubber composition that contains the anti-aging agent represented by the formula (1) or the anti-aging agent represented by the formula (2) according to the invention of the present application can solve the above-mentioned problem because the radicalization through the mercapto-based silane coupling agent is suppressed. Further, it is preferable to avoid the compounding of the anti-aging agent having dihydroquinoline for the reason that the radicalization of the mercapto-based silane coupling agent can be more suppressed.

When the silane coupling agent is contained, the content of silane coupling agent is preferably 4.0 parts by mass or more, more preferably 6.0 parts by mass or more, based on 100 parts by mass of silica for the reason of sufficiently obtaining effects of improving filler dispersibility and reducing viscosity of the rubber composition. Further, the content of the silane coupling agent is preferably 12 parts by mass or less, more preferably 10 parts by mass or less because otherwise the adequate coupling effect and silica dispersion effect could not be obtained and the reinforcing property would be reduced.

The other inorganic fillers include aluminum hydroxide, alumina (aluminum oxide), magnesium sulfate, zirconium oxide, calcium carbonate, talc, bituminous carbon powder, and the like, and these inorganic fillers can be used alone or in combination. Among these, aluminum hydroxide is preferable because it improves the wet grip performance, fuel efficiency performance, abrasion resistance performance, and grip performance.

The BET specific surface area of aluminum hydroxide is preferably 5 m²/g or more, preferably 10 m²/g or more, more preferably 12 m²/g or more, from the viewpoint of wet grip performance. The BET specific surface area of aluminum hydroxide is preferably 50 m²/g or less, more preferably 45 m²/g or less, further more preferably 40 m²/g or less, from the viewpoint of abrasion resistance. It should be noted that the BET specific surface area of aluminum hydroxide as used herein is a value determined by measurement using the BET method in accordance with ASTM D3037-81.

The average particle size (D50) of aluminum hydroxide is preferably 0.1 µm or more, 0.2 µm or more, further preferably 0.3 µm or more, from the viewpoint of abrasion resistance and dispersibility of aluminum hydroxide. The average particle size (D50) of particles of aluminum hydroxide is preferably 3.0 µm or less, more preferably 2.0 µm, from the viewpoint of abrasion resistance. The average particle size (D50) as used herein refers to a particle size at a cumulative mass percentage of 50% in a particle-size distribution curve determined by a particle diameter distribution measurement apparatus.

When aluminum hydroxide is contained, the content of the aluminum hydroxide is preferably 1 part by mass or more, and more preferably 2 parts by mass or more, further preferably 5 parts by mass or more, based on 100 parts by mass of the rubber component from the viewpoint of grip performance. The content of aluminum hydroxide is preferably 50 parts by mass or less, more preferably 45 parts by mass or less, further more preferably 40 parts by mass or less from the viewpoint of abrasion resistance.

The rubber composition according to the present disclosure preferably contains other anti-aging agents, in addition to the anti-aging agent represented by the above-mentioned formula (1) or (2). The other anti-aging agents are not particularly limited, but can be those used in the rubber field, and include, for example, quinoline-based, quinone-based, phenol-based, phenylenediamine-based anti-aging agents, and the like. A phenylenediamine-based anti-aging agent can be suitably used because it is an anti-aging agent of a radical chain prohibition type and can stop the radical chain reaction. An example of the phenylenediamine-based anti-aging agent includes the above-mentioned N-phenyl-N'-(1,3-dimethylbutyl)-p-phenylenediamine (6PPD).

The compounded amount of the other anti-aging agent is preferably one part by mass or more, more preferably two parts by mass or more, based on 100 parts by mass of the rubber component, in consideration of ensuring ozone resistance for a long period of time and also ensuring running properties at a high temperature during racing, as well as volatilization during use. The compounded amount of the other anti-aging agent is preferably 5 parts by mass or less, more preferably 4 parts by mass or less because otherwise the fuel efficiency and the blow property would deteriorate.

As mentioned above, anti-aging agents having dihydroquinoline, such as 2,2,4-trimethyl-1,2-dihydroquinoline polymer (TMQ), and 6-ethoxy-2,2,4-trimethyl-1,2-dihydroquinoline polymer (ETMQ), can cause a deteriorative chain reaction by the radical reactions during kneading. Due to this, the content of the anti-aging agent having dihydroquinoline is preferably 0.5 part by mass or less, more preferably 0.3 part by mass or less, still more preferably 0 part by mass (substantially not contained) based on 100 parts by mass of the rubber component.

The rubber composition according to the present disclosure can be manufactured by general methods. For example, the rubber composition can be manufactured by a method that involves kneading respective components, other than a crosslinking agent and a vulcanization accelerator, with a known kneading machine commonly used in the rubber industry, such as a Banbury mixer, a kneader, or an open roll; then adding the crosslinking agent and the vulcanization accelerator thereto, followed by further kneading a mixture; and subsequently vulcanizing the kneaded mixture.

A tire of the present disclosure can be manufactured using the above-mentioned rubber composition by a normal method. Specifically, the above-mentioned rubber composition, containing the above-mentioned compounding agents which are compounded in a diene-based rubber component as needed, is extruded along the shape of a tread with a single-layer structure or the shape of a cap tread in a double-layer structure tread, consisting of the cap tread (surface layer) and a base tread (inner surface layer) at an unvulcanization stage. Then, the tread(s) and other tire parts are laminated together on a tire building machine and molded by a normal method into an unvulcanized tire, which is then heated and pressurized in a vulcanizer, so that finally, the tire of the present disclosure can be manufactured.

The tire of the present disclosure can be produced as general-purpose tires such as tires for passenger cars, tires for trucks or buses, and tires for motorcycles, as well as tires for races. In the case of producing a general-purpose tire, for example, a tire having a tread is configured by using a rubber composition that contains a carbon black, a silica, a silane coupling agent, and an anti-aging agent represented by the above formula (1) or formula (2), preferably, the formula (1), in a rubber component containing NR and/or BR, in addition to SBR. Consequently, the thus-obtained general-purpose tire becomes a tire that can exhibit the effects inherent to the anti-aging agent and further is good in fuel efficiency and abrasion resistance, because such a rubber composition can suppress the radical reaction during kneading. In the case of producing a race tire, for example, a tire having a tread is configured by using a rubber composition that contains a carbon black and an anti-aging agent represented by the above formula (1) or formula (2), preferably, the formula (2), in a rubber component containing SBR. Consequently, the thus-obtained race tire becomes a tire that is good in achieving both the initial grip performance and the running grip performance without inhibiting the dispersibility between the SBR and carbon black.

### EXAMPLES

The present disclosure will be described in detail based on Examples, but the present disclosure is not to be construed as limited only thereto.

A variety of chemicals used in Examples and Comparative Examples will be described.
NR: TSR20
Modified SBR: prepared by a manufacturing method for a modified SBR to be described later (oil extended amount: 37.5 parts, styrene content: 41% by mass, vinyl content: 40%, Tg: -29°C, weight average molecular weight: 1,190,000)
S-SBR1: NS522 manufactured by ZEON Corporation (oil extended amount: 37.5 parts, styrene content: 39% by mass, vinyl content: 40%, Tg: -34°C, weight-average molecular weight: 840,000)
S-SBR2: NS612 manufactured by ZEON Corporation (non-oil extended, styrene content: 15% by mass, vinyl content: 30%, Tg: -65°C, weight-average molecular weight: 780,000)
BR: CB24 manufactured by Lanxess K.K. (high-cis BR synthesized using a Nd-based catalyst, Tg: -110°C)
Carbon black 1: HP180 manufactured by Olion Engineered Carbons LLC (N₂SA: 175 m²/g)
Carbon black 2: HP160 manufactured by Olion Engineered Carbons LLC (N₂SA: 153 m²/g)
Carbon black 3: EB201 manufactured by Olion Engineered Carbons LLC (N₂SA: 240 m²/g)
Carbon black 4: ShoBlack N110 manufactured by Cabot Japan K. K. (N₂SA: 142 m²/g)
Silica 1: ULTRASIL VN3 manufactured by Evonik Degussa GmbH (N₂SA: 175 m²/g)
Silica 2: ULTRASIL U9000Gr manufactured by Evonik Degussa GmbH (N₂SA: 235 m²/g)
Silane coupling agent 1: Si75 (bis(3-triethoxysilylpropyl)disulfide) manufactured by Evonik Degussa GmbH
Silane coupling agent 2: NXT (8-mercaptooctanoyltriethoxysilane, silane coupling agent with a protected mercapto group) manufactured by Momentive Performance Materials
Silane coupling agent 3: NXT-Z45 (silane coupling agent with a mercapto group) manufactured by Momentive Performance Materials
Aluminum hydroxide 1: Ath#C (average particle size: 0.8 µm, N₂SA: 7 m²/g) manufactured by Sumitomo Chemical Co., Ltd.
Aluminum hydroxide 2: Ath#B (average particle size: 0.6 µm, N₂SA: 15 m²/g) manufactured by Sumitomo Chemical Co., Ltd.
Wax: Ozoace 355 manufactured by NIPPON SEIRO CO., LTD.
Anti-aging agent 1: Antigene 6C (6PPD, N-(1,3-dimethylbutyl)-N'-phenyl-p-phenylenediamine) manufactured by Sumitomo Chemical Co., Ltd.
Anti-aging agent 2: NOCRAC 224 (TMQ, 2,2,4-trimethyl-1,2-dihydroquinoline polymer) manufactured by Ouchi Shinko Chemical Industrial Co., Ltd.
Anti-aging agent 3: Antage BHT (2,6-dibutyl-p-cresol) manufactured by Kawaguchi Chemical Industry Co., Ltd.
Anti-aging agent 4: Antage W-400 (anti-aging agent represented by formula (5), 2,2'-methylene-bis(4-methyl-6-butylphenol)) manufactured by Kawaguchi Chemical Industry Co., Ltd. 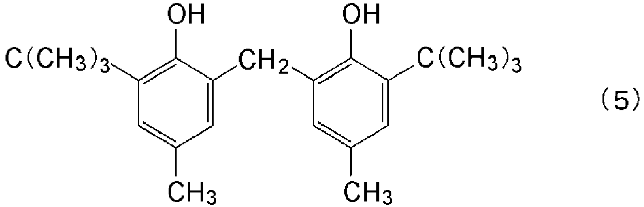
Anti-aging agent 5: Antage W-500 (anti-aging agent represented by formula (6), 2,2'-methylene-bis(4-ethyl-6-butylphenol)) manufactured by Kawaguchi Chemical Industry Co., Ltd. 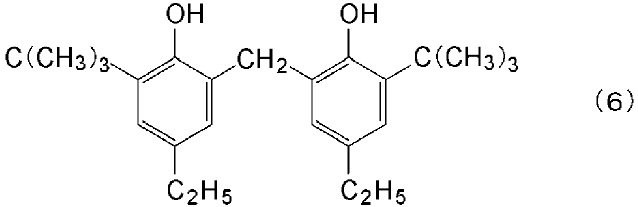
Anti-aging agent 6: Antage HP-400 (anti-aging agent represented by formula (3), 4,6-bis(octyltiomethyl)-o-cresol) manufactured by Kawaguchi Chemical Industry Co., Ltd. 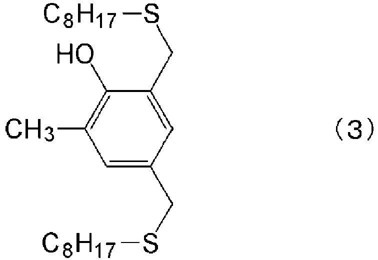
Anti-aging agent 7: Antage HP-500 (anti-aging agent represented by formula (4), 4,6-bis(dodecylthiomethyl)-o-cresol) manufactured by Kawaguchi Chemical Industry Co., Ltd. 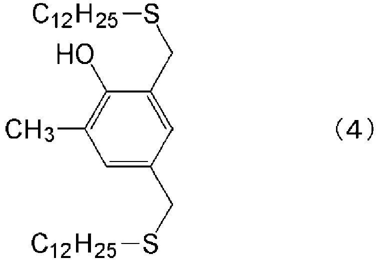
Plasticizer 1: TOP (trioctyl phosphate) manufactured by DAIHACHI CHEMICAL INDUSTRY CO., LTD.
Plasticizer 2: Vivatec500 (TDAE oil, Tg: -58°C) manufactured by H&R Co., Ltd.
Resin component 1: Koresin (phenol-acetylene condensation resin) manufactured by BASF Corporation
Resin component 2: M125 (hydrogenated styrene terpene resin, SP value: 8.52, softening point: 125°C, Tg: 65) manufactured by Yasuhara Chemical Co., Ltd.
Zinc oxide: Zinc oxide #2 manufactured by Mitsui Mining & Smelting Co., Ltd.
Stearic acid: Stearic acid Tsubaki manufactured by NOF CORPORATION Sulfur: HK-200-5 (oil content: 5% by mass) manufactured by Hosoi Chemical Industry Co., Ltd.
Vulcanization accelerator 1: Nocceler NS-G (TBBS, N-tert-butyl-2-benzothiazyl sulfenamide) manufactured by Ouchi Shinko Chemical Industrial Co., Ltd.
Vulcanization accelerator 2: Nocceler D (DPG, 1,3-diphenylguanidine) manufactured by Ouchi Shinko Chemical Industrial Co., Ltd.
Vulcanization accelerator 3: Axel TBZT (TBZTD, tetrabenzyl thiuram disulfide) manufactured by Kawaguchi Chemical Industry Co., Ltd.

### Manufacturing method of modified SBR

### (1) Production of terminal modifier

In a nitrogen atmosphere, 20.8 g of 3-(N,N-dimethylamino)propyl trimethoxysilane (manufactured by AZMAX Corp.) was placed in a 250 mL flask, to which anhydrous hexane (manufactured by KANTO CHEMICAL CO., INC.) was further added, thereby producing 250 mL of a solution as a whole.

### (2) Preparation of Modified SBR

Then, 18 L of n-hexane, 800 g of styrene (manufactured by KANTO CHEMICAL CO., INC.), 1200 g of butadiene, and 1.1 mmol of tetramethylethylenediamine were added into a 30 L pressure vessel fully substituted by nitrogen, followed by raising the temperature of a resulting solution to 40°C. Then, to the solution was added 1.8 mL of 1.6 M butyllithium (manufactured by Kanto Chemical Co., Ltd.), followed by raising the temperature of this solution to 50°C, and then stirring it for 3 hours. Subsequently, 4.1 mL of the above-mentioned terminal modifier was added to the solution, which was then stirred for 30 minutes. To this reaction solution, 15 mL of methanol and 0.1 g of 2,6-tert butyl-p-cresol (manufactured by Ouchi Shinko Chemical Industrial Co., Ltd.) were added, and then 1200 g of TDAE was added and stirred for 10 minutes. Then, an aggregate was then recovered from a polymer solution by a steam stripping process. The resulting aggregate was dried under a reduced pressure for 24 hours to obtain a modified SBR. The bond styrene content was 41% by mass, the vinyl content was 40%, Tg was -29°C, and Mw was 1,190,000.

### Examples 1 to 12 and Comparative Examples 1 to 6 (general-purpose tires)

According to the compounding formulations shown in Tables 1 and 2, all chemicals, other than sulfur and a vulcanization accelerator, were kneaded using a 1.7 L sealed Banbury mixer for five minutes at a discharge temperature of 170°C to obtain a kneaded product. Furthermore, the obtained kneaded product was kneaded (remilled) at a discharge temperature of 150°C for four minutes by the Banbury mixer. Then, sulfur and a vulcanization accelerator were added to the obtained kneaded product using a biaxial open roll, and kneaded for 4 minutes up to 105°C to obtain an unvulcanized rubber composition. The obtained unvulcanized rubber composition was vulcanized and molded at 170°C for 12 minutes at a pressure of 25 kgf/cm² to prepare a test rubber composition.

Subsequently, the unvulcanized rubber composition was extruded and molded by an extruder equipped with a base having a predetermined shape, and then laminated with other tire members to form an unvulcanized tire, which was then press-vulcanized at 170°C for 12 minutes to manufacture a tire for test (PC tire). The obtained test rubber compositions and test tires were evaluated for the following properties. The results are shown in Tables 1 and 2.

### Fuel Efficiency Index

A loss-tangent tanδ of each test rubber composition was measured by using a viscoelastic spectrometer VES, manufactured by Iwamoto Seisakusho Co., Ltd., under the conditions of a temperature of 50°C, a frequency of 10 Hz, an initial strain of 10% and a dynamic strain of 2%. It shows that the smaller the tanδ is, the lower the heat generation property becomes and the better the fuel efficiency becomes. The fuel efficiency in each of Examples and Comparative Examples is indicated by an index, assuming that a reciprocal of tanδ in Comparative Example 1 is 100. It shows that the larger the index, the better the fuel efficiency becomes. It should be noted that the fuel efficiency index of 110 or more is the targeted value of performance.

### Abrasion Resistance Index

The respective test tires were mounted on a domestic FR vehicle with a displacement 2000 cc, and the vehicle was driven on a 500 km long run in an Okayama International Circuit track.
Running mode: severe handling to the extent that a tread main groove is cut by approximately 1 mm in the 20 km running, including a figure-of-eight sharp turn.

After running, the amount of a remaining groove of the tire tread rubber was measured (with a tread groove of a new product being 8 mm) and evaluated as the abrasion resistance. The more an average remaining groove amount of the main groove is, the better the abrasion resistance becomes. The abrasion resistance in each of Examples and Comparative Examples is indicated by an index, assuming that the remaining groove amount in Comparative Example 1 is 100. It shows that the larger the index is, the better the abrasion resistance becomes. It should be noted that the abrasion resistance index of 110 or more is the targeted value of performance.

**Table 1**

| | Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| NR | - | - | - | - | - | - | - | 30 | - |
| Modified SBR | 96.3 | 96.3 | 96.3 | 96.3 | 96.3 | 96.3 | 96.3 | 96.3 | 96.3 |
| S-SBR1 | - | - | - | - | - | - | - | - | - |
| S-SBR2 | - | - | - | - | - | - | - | - | 30 |
| BR | 30 | 30 | 30 | 30 | 30 | 30 | 30 | - | - |
| Carbon black 1 | - | - | - | - | - | - | - | 10 | - |
| Carbon black 2 | - | - | - | - | - | - | - | - | - |
| Carbon black 3 | - | - | - | - | - | - | - | - | - |
| Carbon black 4 | 5 | 5 | 5 | 5 | 5 | 5 | 5 | - | 5 |
| Silica 1 | 100 | 100 | 100 | 100 | 100 | 100 | 100 | 95 | 95 |
| Silica 2 | - | - | - | - | - | - | - | - | - |
| Silane coupling agent 1 | - | - | - | - | - | - | - | - | - |
| Silane coupling agent 2 | 8.0 | 8.0 | 8.0 | 8.0 | 8.0 | 8.0 | - | 7.6 | 7.6 |
| Silane coupling agent 3 | - | - | - | - | - | - | 8.0 | - | - |
| Aluminum hydroxide 1 | - | - | - | - | - | - | - | - | - |
| Aluminum hydroxide 2 | - | - | - | - | - | - | - | - | - |
| Wax | 1.0 | 1.0 | 1.0 | 1.0 | 1.0 | 1.0 | 1.0 | 1.0 | 1.0 |
| Anti-aging agent 1 | 2.0 | 2.0 | 2.0 | 2.0 | 2.0 | 2.0 | 2.0 | 2.0 | 2.0 |
| Anti-aging agent 2 | - | - | - | - | - | - | - | - | - |
| Anti-aging agent 3 | - | - | - | - | - | - | - | - | - |
| Anti-aging agent 4 | - | - | 1.5 | - | - | 5.0 | - | - | - |
| Anti-aging agent 5 | - | - | - | - | - | - | - | - | - |
| Anti-aging agent 6 | 1.5 | - | - | 0.5 | 5.0 | - | 1.5 | 1.5 | 1.5 |
| Anti-aging agent 7 | - | 1.5 | - | - | - | - | - | - | |
| Plasticizer 1 | - | - | - | - | - | - | - | - | - |
| Plasticizer 2 | - | - | - | - | - | - | - | - | - |
| Resin component 1 | - | - | - | - | - | - | - | - | - |
| Resin component 2 | - | - | - | - | - | - | - | - | - |
| Zinc oxide | - | - | - | - | - | - | - | - | - |
| Stearic acid | 5 | 5 | 5 | 5 | 5 | 5 | 5 | 5 | 5 |
| Sulfur (oil content of 5%) | 2 | 2 | 2 | 2 | 2 | 2 | 2 | 2 | 2 |
| Vulcanization accelerator 1 | 3 | 3 | 3 | 3 | 3 | 3 | 3 | 3 | 3 |
| Vulcanization accelerator 2 | 1.5 | 1.5 | 1.5 | 1.5 | 1.5 | 1.5 | 1.5 | 1.5 | 1.5 |
| Vulcanization accelerator 3 | 2.5 | 2.5 | 2.5 | 2.5 | 2.5 | 2.5 | 2.5 | 2.5 | 2.5 |
| Results of evaluation | | | | | | | | | |
| Fuel efficiency index | 115 | 111 | 111 | 111 | 113 | 110 | 124 | 115 | 114 |
| Abrasion resistance index | 117 | 115 | 112 | 112 | 120 | 110 | 126 | 110 | 114 |

**Table 2**

| | Example | | | Comparative Example | | | | | |
|---|---|---|---|---|---|---|---|---|---|
| | 10 | 11 | 12 | 1 | 2 | 3 | 4 | 5 | 6 |
| Compounding amount (part by mass) | | | | | | | | | |
| NR | - | - | - | - | - | - | - | - | - |
| Modified SBR | 96.3 | 96.3 | 96.3 | 96.3 | 96.3 | 96.3 | 96.3 | 96.3 | 96.3 |
| S-SBR1 | - | - | - | - | - | - | - | - | - |
| S-SBR2 | - | - | - | - | - | - | - | - | - |
| BR | 30 | 30 | 30 | 30 | 30 | 30 | 30 | 30 | 30 |
| Carbon black 1 | 10 | 5 | - | - | - | - | - | - | - |
| Carbon black 2 | - | - | - | - | - | - | - | - | - |
| Carbon black 3 | - | - | - | - | - | - | - | - | - |
| Carbon black 4 | - | - | 5 | 5 | 5 | 5 | 5 | 5 | 5 |
| Silica 1 | - | - | 100 | 95 | 100 | 100 | 100 | 100 | 100 |
| Silica 2 | 70 | 70 | - | - | - | - | - | - | - |
| Silane coupling agent 1 | - | - | - | 7.6 | - | 8.0 | - | - | - |
| Silane coupling agent 2 | 5.6 | 5.6 | 8.0 | - | 8.0 | - | 8.0 | 8.0 | - |
| Silane coupling agent 3 | - | - | - | - | - | - | - | - | 8.0 |
| Aluminum hydroxide 1 | - | - | - | - | - | - | - | - | - |
| Aluminum hydroxide 2 | - | 10 | - | - | - | - | - | - | - |
| Wax | 1.0 | 1.0 | 1.0 | 1.0 | 1.0 | 1.0 | 1.0 | 1.0 | 1.0 |
| Anti-aging agent 1 | 2.0 | 2.0 | 2.0 | 2.0 | 2.0 | 2.0 | 2.0 | 3.5 | 2.0 |
| Anti-aging agent 2 | - | - | - | 1.5 | 1.5 | 5.0 | - | - | 1.5 |
| Anti-aging agent 3 | - | - | - | - | - | - | 1.5 | - | - |
| Anti-aging agent 4 | - | - | - | - | - | - | - | - | - |
| Anti-aging agent 5 | - | - | 1.5 | - | - | - | - | - | - |
| Anti-aging agent 6 | 1.5 | 1.5 | - | - | - | - | - | - | - |
| Anti-aging agent 7 | - | - | - | - | - | - | - | - | - |
| Plasticizer 1 | - | - | - | - | - | - | - | - | - |
| Plasticizer 2 | - | - | - | - | - | - | - | - | - |
| Resin component 1 | - | - | - | - | - | - | - | - | - |
| Resin component 2 | - | - | - | - | - | - | - | - | - |
| Zinc oxide | - | - | - | - | - | - | - | - | - |
| Stearic acid | 5 | 5 | 5 | 5 | 5 | 5 | 5 | 5 | 5 |
| Sulfur (oil content of 5%) | 2 | 2 | 2 | 2 | 2 | 2 | 2 | 2 | 2 |
| Vulcanization accelerator 1 | 3 | 3 | 3 | 3 | 3 | 3 | 3 | 3 | 3 |
| Vulcanization accelerator 2 | 1.5 | 1.5 | 1.5 | 1.5 | 1.5 | 1.5 | 1.5 | 1.5 | 1.5 |
| Vulcanization accelerator 3 | 2.5 | 2.5 | 2.5 | 2.5 | 2.5 | 2.5 | 2.5 | 2.5 | 2.5 |
| Results of evaluation | | | | | | | | | |
| Fuel efficiency index | 122 | 130 | 110 | 100 | 108 | 88 | 106 | 108 | 121 |
| Abrasion resistance index | 135 | 130 | 110 | 100 | 109 | 82 | 103 | 114 | 106 |

The results of Tables 1 and 2 show that the general-purpose tire of the present disclosure is a tire good in the fuel efficiency performance and abrasion resistance by having the tread composed of the rubber composition that suppresses a radical chain reaction during kneading.

### Examples 13 to 27 and Comparative Examples 7 to 10 (race tires)

According to the compounding formulations shown in Tables 3 and 4, all chemicals, other than sulfur and a vulcanization accelerator, were kneaded using a 1.7 L sealed Banbury mixer for five minutes at a discharge temperature of 170°C to obtain a kneaded product. Then, sulfur and a vulcanization accelerator were added to the obtained kneaded product using a biaxial open roll, and kneaded for 4 minutes up to 105°C to obtain an unvulcanized rubber composition.

Subsequently, the unvulcanized rubber composition was extruded and molded by an extruder equipped with a base having a predetermined shape, and then laminated together with other tire members to form an unvulcanized tire, which was then press-vulcanized on the conditions of a temperature of 170°C for 12 minutes to manufacture a tire for test (race tire). The obtained test tires were evaluated for the following properties. The results are shown in Tables 3 and 4.

### Initial Grip Performance

The respective test tires were mounted on all wheels of a domestic FR vehicle (2000 cc), and the vehicle was actually driven 10 laps on a dry asphalt road surface in a test course. At this time, the stability of control of driving at the second lap was evaluated by a test driver, and the result in each of Examples and Comparative Examples is indicated by an index, assuming that the result in the Comparative Example 7 is indicated by an index of 100. It shows that the larger the index number is, the higher the initial grip performance is. It should be noted that the initial grip performance index of 105 or more is the targeted index of performance.

### Running Grip Performance

The respective test tires were mounted on all wheels of a domestic FR vehicle (2000 cc), and the vehicle was actually driven 10 laps on a dry asphalt road surface in a test course. At this time, the stability of control of the driving at the best lap and the final lap was compared and evaluated by a test driver, and the result in each of Examples and Comparative Examples is indicated by an index, assuming that the result in the Comparative Example 7 is indicated by an index number of 100. It shows that the larger the index number is, the smaller the deterioration of grip performance on the dry road surface during running becomes, so that the stable grip performance during running can be obtained satisfactorily. It should be noted that the running grip performance index of 105 or more is the targeted index of performance.

**Table 3**

| | Example | | | | | | | | | | |
|---|---|---|---|---|---|---|---|---|---|---|---|
| | 13 | 14 | 15 | 16 | 17 | 18 | 19 | 20 | 21 | 22 | 23 |
| Compounding amount (part by mass) | | | | | | | | | | | |
| NR | - | - | - | - | - | - | - | - | - | - | - |
| Modified SBR | 137.5 | 137.5 | 137.5 | 137.5 | 137.5 | 137.5 | 137.5 | 137.5 | 137.5 | 137.5 | 137.5 |
| S-SBR1 | - | - | - | - | - | - | - | - | - | - | - |
| S-SBR2 | - | - | - | - | - | - | - | - | - | - | - |
| BR | - | - | - | - | - | - | - | - | - | - | - |
| Carbon black 1 | 115 | 115 | 115 | 115 | 115 | 115 | - | - | - | 115 | 115 |
| Carbon black 2 | - | - | - | - | - | - | 125 | - | - | - | - |
| Carbon black 3 | - | - | - | - | - | - | - | 105 | - | - | - |
| Carbon black 4 | - | - | - | - | - | - | - | - | 130 | - | - |
| Silica 1 | - | - | - | - | - | - | - | - | - | - | - |
| Silica 2 | - | - | - | - | - | - | - | - | - | - | - |
| Silane coupling agent 1 | - | - | - | - | - | - | - | - | - | - | - |
| Silane coupling agent 2 | - | - | - | - | - | - | - | - | - | - | - |
| Silane coupling agent 3 | - | - | - | - | - | - | - | - | - | - | - |
| Aluminum hydroxide 1 | - | - | - | - | - | - | - | - | 20 | 10 | - |
| Aluminum hydroxide 2 | - | - | - | - | - | - | - | - | - | - | 10 |
| Wax | 1.0 | 1.0 | 1.0 | 1.0 | 1.0 | 1.0 | 1.0 | 1.0 | 1.0 | 1.0 | 1.0 |
| Anti-aging agent 1 | 2.0 | 3.0 | 2.0 | 2.0 | 2.0 | 2.0 | 2.0 | 2.0 | 2.0 | 2.0 | 2.0 |
| Anti-aging agent 2 | - | - | - | - | - | - | - | - | - | - | - |
| Anti-aging agent 3 | - | - | - | - | - | - | - | - | - | - | - |
| Anti-aging agent 4 | - | - | 1.5 | - | - | 5.0 | - | - | - | - | - |
| Anti-aging agent 5 | - | - | - | - | - | - | - | - | - | - | - |
| Anti-aging agent 6 | 1.5 | - | - | 0.5 | 5.0 | - | 1.5 | 1.5 | 1.5 | 1.5 | 1.5 |
| Anti-aging agent 7 | - | 1.5 | - | - | - | - | - | - | - | - | - |
| Plasticizer 1 | 10 | 10 | 10 | 10 | 10 | 10 | 10 | 10 | 10 | 10 | 10 |
| Plasticizer 2 | 15 | 15 | 15 | 15 | 11.5 | 15 | 15 | 15 | 15 | 15 | 15 |
| Resin component 1 | 20 | 20 | 20 | 20 | 20 | 20 | 20 | 20 | 20 | 20 | 20 |
| Resin component 2 | 10 | 10 | 10 | 10 | 10 | 10 | 10 | 10 | 10 | 10 | 10 |
| Zinc oxide | 2 | 2 | 2 | 2 | 2 | 2 | 2 | 2 | 2 | 2 | 2 |
| Stearic acid | 3 | 3 | 3 | 3 | 3 | 3 | 3 | 3 | 3 | 3 | 3 |
| Sulfur (oil content of 5%) | 1.1 | 1.1 | 1.1 | 1.1 | 1.1 | 1.1 | 1.1 | 1.1 | 1.1 | 1.1 | 1.1 |
| Vulcanization accelerator 1 | 3 | 3 | 3 | 3 | 3 | 3 | 3 | 3 | 3 | 3 | 3 |
| Vulcanization accelerator 2 | - | - | - | - | - | - | - | - | - | - | - |
| Vulcanization accelerator 3 | 2 | 2 | 2 | 2 | 2 | 2 | 2 | 2 | 2 | 2 | 2 |
| Results of evaluation | | | | | | | | | | | |
| Initial grip performance | 107 | 111 | 110 | 105 | 110 | 113 | 108 | 111 | 106 | 115 | 116 |
| Running grip performance | 111 | 108 | 114 | 106 | 112 | 116 | 112 | 116 | 105 | 119 | 120 |

**Table 4**

| | Example | | | | Comparative Example | | | |
|---|---|---|---|---|---|---|---|---|
| | 24 | 25 | 26 | 27 | 7 | 8 | 9 | 10 |
| Compounding amount (part by mass) | | | | | | | | |
| NR | - | - | - | - | - | - | - | - |
| Modified SBR | 110 | 96.25 | - | 137.5 | 137.5 | 137.5 | 137.5 | 137.5 |
| S-SBR1 | - | - | 137.5 | - | - | - | - | - |
| S-SBR2 | - | 30 | - | - | - | - | - | - |
| BR | 20 | - | - | - | - | - | - | - |
| Carbon black 1 | 115 | 115 | 115 | 115 | 115 | 115 | 115 | 115 |
| Carbon black 2 | - | - | - | - | - | - | - | - |
| Carbon black 3 | - | - | - | - | - | - | - | - |
| Carbon black 4 | - | - | - | - | - | - | - | - |
| Silica 1 | - | - | - | - | - | - | - | - |
| Silica 2 | - | - | - | - | - | - | - | - |
| Silane coupling agent 1 | - | - | - | - | - | - | - | - |
| Silane coupling agent 2 | - | - | - | - | - | - | - | - |
| Silane coupling agent 3 | - | - | - | - | - | - | - | - |
| Aluminum hydroxide 1 | - | - | - | - | - | - | - | - |
| Aluminum hydroxide 2 | - | - | - | - | - | - | - | - |
| Wax | 1.0 | 1.0 | 1.0 | 1.0 | 1.0 | 1.0 | 1.0 | 1.0 |
| Anti-aging agent 1 | 2.0 | 2.0 | 2.0 | 2.0 | 2.0 | 2.0 | 2.0 | 3.5 |
| Anti-aging agent 2 | - | - | - | - | 1.5 | - | 5.0 | - |
| Anti-aging agent 3 | - | - | - | - | - | 1.5 | - | - |
| Anti-aging agent 4 | - | - | - | - | - | - | - | - |
| Anti-aging agent 5 | - | - | - | 1.5 | - | - | - | - |
| Anti-aging agent 6 | 1.5 | 1.5 | 1.5 | - | - | - | - | - |
| Anti-aging agent 7 | - | - | - | - | - | - | - | - |
| Plasticizer 1 | 10 | 10 | 10 | 10 | 10 | 10 | 10 | 10 |
| Plasticizer 2 | 15 | 15 | 15 | 15 | 15 | 15 | 15 | 15 |
| Resin component 1 | 20 | 30 | 20 | 20 | 20 | 20 | 20 | 20 |
| Resin component 2 | 25 | 10 | 25 | 10 | 10 | 10 | 10 | 10 |
| Zinc oxide | 2 | 2 | 2 | 2 | 2 | 2 | 2 | 2 |
| Stearic acid | 3 | 3 | 3 | 3 | 3 | 3 | 3 | 3 |
| Sulfur (oil content of 5%) | 1.1 | 1.1 | 1.1 | 1.1 | 1.1 | 1.1 | 1.1 | 1.1 |
| Vulcanization accelerator 1 | 3 | 3 | 3 | 3 | 3 | 3 | 3 | 3 |
| Vulcanization accelerator 2 | - | - | - | - | - | - | - | - |
| Vulcanization accelerator 3 | 2 | 2 | 2 | 2 | 2 | 2 | 2 | 2 |
| Results of evaluation | | | | | | | | |
| Initial grip performance | 107 | 110 | 108 | 109 | 100 | 95 | 96 | 101 |
| Running grip performance | 106 | 113 | 110 | 112 | 100 | 88 | 90 | 100 |

The results of Tables 3 and 4 show that the race tire of the present disclosure is a tire that is good in achieving both the initial grip performance and the running grip performance by having the tread composed of the rubber composition that suppresses a radical chain reaction during kneading.

## Claims

1. A tire comprising a tread composed of a rubber composition,
the rubber composition comprising
3 parts by mass or more of a carbon black having a nitrogen adsorption specific surface area of 80 m²/g or more, and
0.1 to 10 parts by mass of an anti-aging agent represented by the following formula (1) or an anti-aging agent represented by the following formula (2), based on 100 parts by mass of a rubber component comprising a styrene butadiene rubber, 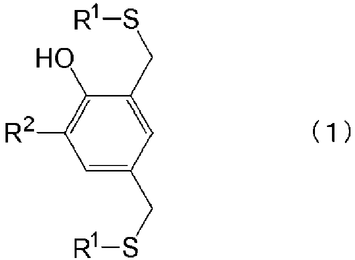
where each R¹ independently represents a C₁ to C₂₀ alkyl group which may have a substituent, a phenyl group which may have a substituent, or a benzyl group which may have a substituent, and R² is a C₁ to C₁₀ alkyl group which may have a substituent or a C₅ to C₁₂ cycloalkyl group which may have a substituent, 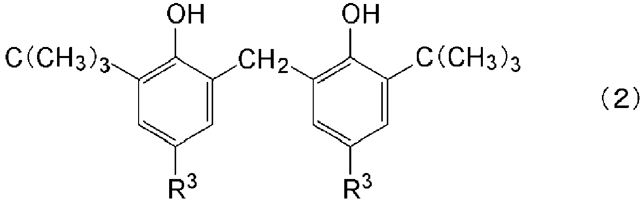
where each R³ independently represents a C₁ to C₁₀ alkyl group.

2. The tire of claim 1,
wherein the rubber component is a rubber component that comprises 60% by mass or more of a styrene butadiene rubber in which a styrene content is in a range of 16 to 60% by mass.

3. The tire of claim 1 or 2,
wherein a nitrogen adsorption specific surface area of the carbon black is 151 m²/g or more, and a content of the carbon black is 5 parts by mass or more.

4. The tire of any of claims 1 to 3,
wherein the rubber composition is a rubber composition that further comprises 20 parts by mass of a silica and a mercapto-based silane coupling agent, based on 100 parts by mass of the rubber component.

5. The tire of any of claims 1 to 4,
wherein the rubber composition is a rubber composition that does not comprise an anti-aging agent having dihydroquinoline.

## Amended claims

### Amended claims under Art. 19.1 PCT

1. (Amended) A tire comprising a tread composed of a rubber composition,
the rubber composition comprising
3 parts by mass or more of a carbon black having a nitrogen adsorption specific surface area of 80 m²/g or more, and
0.1 to 10 parts by mass of an anti-aging agent represented by the following formula (1) or an anti-aging agent represented by the following formula (2), based on 100 parts by mass of a rubber component comprising a modified styrene butadiene rubber, 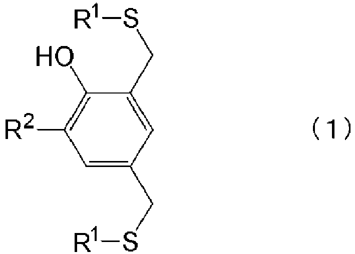
where each R¹ independently represents a C₁ to C₂₀ alkyl group which may have a substituent, a phenyl group which may have a substituent, or a benzyl group which may have a substituent, and R² is a C₁ to C₁₀ alkyl group which may have a substituent or a C₅ to C₁₂ cycloalkyl group which may have a substituent, 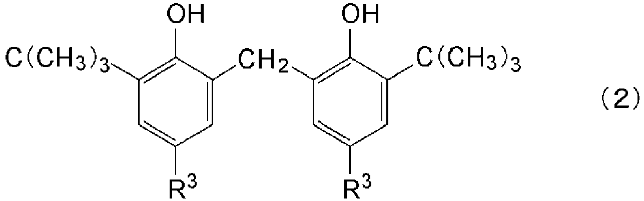
where each R³ independently represents a C₁ to C₁₀ alkyl group.

2. The tire of claim 1,
wherein the rubber component is a rubber component that comprises 60% by mass or more of a styrene butadiene rubber in which a styrene content is in a range of 16 to 60% by mass.

3. The tire of claim 1 or 2,
wherein a nitrogen adsorption specific surface area of the carbon black is 151 m²/g or more, and a content of the carbon black is 5 parts by mass or more.

4. (Amended) The tire of any of claims 1 to 3,
wherein the rubber composition is a rubber composition that further comprises 40 parts by mass or more of a silica and a mercapto-based silane coupling agent, based on 100 parts by mass of the rubber component.

5. The tire of any of claims 1 to 4,
wherein the rubber composition is a rubber composition that does not comprise an anti-aging agent having dihydroquinoline.

Statement under Art. 19.1 PCT
The amendment of Claim 1 is made on the basis of the descriptions of Paragraphs [0076] and [0077] of the specification of the original application as filed in order to specify the scope of original Claim 1. This amendment clarifies differences from Documents 1 to 3.

That is, the present invention is **characterized by** "comprising predetermined carbon black and anti-aging agent, based on a rubber component containing a modified styrene butadiene rubber". The effects of the present invention are shown in Tables 1 to 4.

The amendment of Claim 4 is made in accordance with the description of the contents in Paragraph [0061] of the specification of the original application as filed.
